# EUROPEAN PATENT SPECIFICATION

(11) **EP 2 611 000 B1**
(45) Date of publication and mention of the grant of the patent: **01.05.2019**
(21) Application number: 12199495.8
(22) Date of filing: 27.12.2012
(51) Int. Cl.: H02K 1/16, H02K 3/28, H02K 3/34, H02K 5/22

(54) **Electric motor**
Elektromotor
Moteur électrique

(30) Priority: 28.12.2011 JP 2011289180
(43) Date of publication of application: 03.07.2013
(73) Proprietor: Fujitsu General Limited, Kawasaki-shi Kanagawa 213-8502 (JP)
(72) Inventor: Taema, Yoshihiro, KAWASAKI-SHI, KANAGAWA, 213-8502 (JP)
(74) Representative: Kreutzer, Ulrich

(56) References cited:
- EP-A2- 0 915 558
- EP-A2- 2 372 879
- WO-A2-2011/055920
- JP-A- 2001 178 059

## Description

### BACKGROUND OF THE INVENTION

### 1. Field of the Invention

The present invention relates to an electric motor that includes teeth of a stator around which a winding is wound by a parallel winding.

### 2. Description of the Related Art

Conventionally, when lead wire is wound around a winding body portion of an insulator of a stator of an electric motor, the winding is required to start from the end of the winding body portion in order that the lead wire of the second row from the regular winding is placed between the lines of the first row with a good alignment. Particularly, in recent years, due to the requirement of the domestic AEPF (Annual Energy Performance Factor), in addition to the rated condition, the relative importance of the performance improvement of the intermediate condition becomes large. Accordingly, in order to address this situation, it is essential to make higher a space factor of the winding of the electric motor. Thus, the higher space factor of the winding can be realized by increasing the number of turning, increasing the inductance, and by decreasing harmonic components. This, in turn, addresses the above-mentioned requirement of AEPF. Therefore, the winding structure needs to be improved.

Then, on an inner circumferential face of a yoke of a stator of a conventional electric motor, a plurality of teeth projecting in a radial direction are formed, and a winding is wound around respective teeth so as to configure an armature coil. This armature coil is wound around such that the winding is started at a brim portion on one side of a tubular portion of an insulator, and after wound a few turns, is ended at an end portion in the radial direction on the other side opposite to the winding start portion. However, the armature coil makes contact with each other at the winding start portion and the winding end portion over the portion of several turns so that the insulation of the armature coil against high voltage becomes weak. Accordingly, sufficient insulation has to be provided for the armature coil, for example, by inserting an insulator sheet in the contacting portion, or by forming the coil in a tube. Here, Japanese Laid-open Patent Publication No. 2001-178059 discloses the insulator disposed on the teeth that is made of the tubular portion and the brim portions formed on both ends of the tubular portion. An L-shaped groove is formed on the winding start potion of the coil on one brim portion, and the coil of the winding start is embedded in the groove so as to prevent the coils from making contact with each other.

The armature of the conventional electric motor described in the Patent Publication No. 2001-178059 is configured such that a groove is formed at the brim portion on one side of the tubular portion of the insulator (namely, teeth of the insulator), and the winding start portion of the coil is embedded in the groove. With this, it becomes possible to improve the insulation performance of the armature coil without inserting an insulator sheet into the contacting portion of an armature coil, or inserting the armature coil through a tube. However, the Patent Publication No. 2001-178059 does not disclose whether or not the winding configuration of the coil (lead wire) is supposed to include parallel winding. Even when the parallel winding is supposed in the Patent Publication No. 2001-178059, the characteristic solving means is described as "an insulator 15 is configured by a tubular portion 12 and brim portions 13, 14 formed on both ends of this tubular portion 12, and an L-shaped groove 17 is formed on the winding start portion of the armature coil 16 at one brim portion 13 (abstract of the Patent Publication No. 2001-178059)." Therefore, in the Patent Publication No. 2001-178059, the contact between the winding start portion and the winding end portion of the armature coil can be prevented. However, in the case that the parallel winding is adopted for the winding structure, when the lead wire is used including the jumper and the folded line (described in detail later) and is wound around as the winding, the folded line and the winding are overlapped with each other. This deteriorates the alignment, the irregularity of the winding deteriorates the alignment of the following rows, and the space factor of the winding lowers. The Patent Publication No. 2001-178059 could not solve these problems.

For the foregoing reasons, there is a need for an electric motor that can provide a less irregularity of winding and a high space factor when lead wire is wound around a plurality of teeth via an insulator to make a stator.

EP 0 915 558 A2 shows an electric motor according to the preamble of claim 1.

A core of a motor stator of EP 2 372 879 A2 includes a yoke, teeth, U-shaped grooves formed on the circumference of the yoke in the axial direction insulators each including an outer circumference wall, hoisting drums, inner guards, and at least three engagement claws located spaced apart in the circumferential direction on the outside of the outer circumference wall and fitted in axial-direction ends of the grooves respectively.

### SUMMARY OF THE INVENTION

The present invention is directed to an electric motor that satisfies the need.

One aspect of the present invention relates to the electric motor. The electric motor includes a rotator and a stator disposed on an outer diameter side of the rotator. The stator includes a cylindrical stator iron core provided with a plurality of teeth radially projecting from an inner circumferential side of an annular yoke toward a center; insulators made of an insulation material disposed on both ends of the stator iron core in an axial direction; and windings wound around the teeth via the insulators. The insulator includes a first groove disposed on an inner circumferential side thereof along an axial direction. The stator iron core includes a second groove disposed on an inner circumferential side thereof along the axial direction. The first groove and the second groove are disposed so as to communicate with each other in the axial direction, and the first groove and the second groove which communicate with each other embed therein a part of a connection line connecting the windings mutually.

### BRIEF DESCRIPTION OF THE DRAWINGS

FIG. 1 is an exploded perspective view of a stator of an electric motor according to the present invention.
FIG. 2 is an enlarged perspective view of an insulator of FIG. 1.
FIG. 3 is an enlarged perspective view of an insulator film of FIG. 1.
FIG. 4 is a plan view of the insulator film of FIG. 3.
FIG. 5 is a plan view of a stator that is made by assembling an insulator and a stator iron core of FIG. 1.
FIG. 6 is a partial enlarged view illustrating a state of winding, by a winding machine, wire around the teeth of the stator of FIG. 5.
FIG. 7 is a connection diagram of a parallel winding of the stator of an electric motor according to the present invention.
FIG. 8 is a development view of a state in which lead wire is wound around the stator of FIG. 1 by a connection method of parallel winding of FIG. 7.
FIG. 9 is a diagram illustrating a state in which wire is wound around all of the teeth of the stator of FIG. 5 by a winding machine.

### DETAILED DESCRIPTION OF THE PREFERRED EMBODIMENTS

An embodiment of an electric motor according to the present invention is illustrated in detail with reference to the drawings hereunder. Note that this invention is not limited by this embodiment.

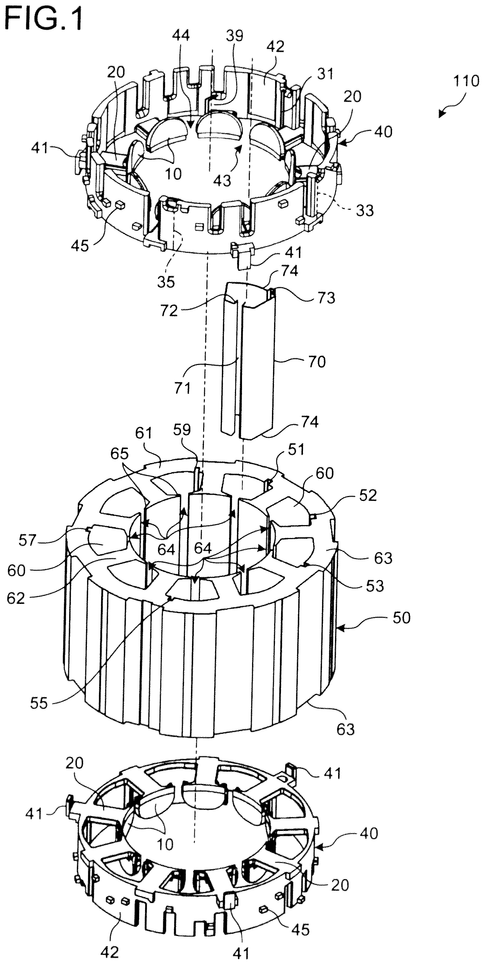

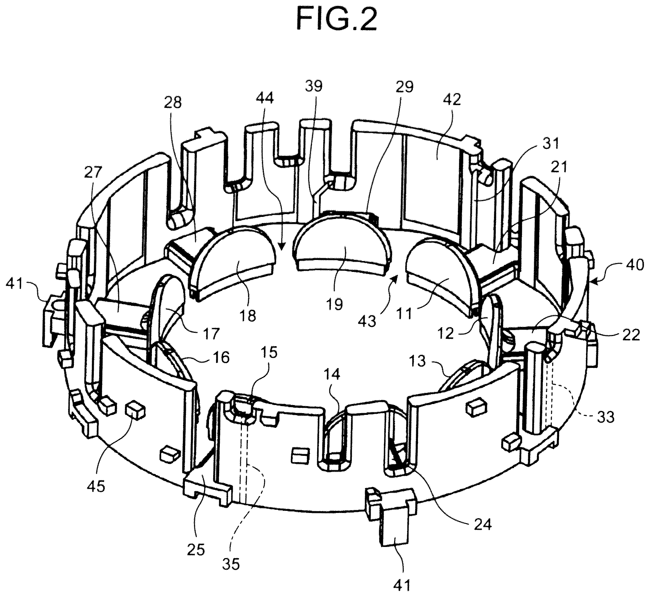

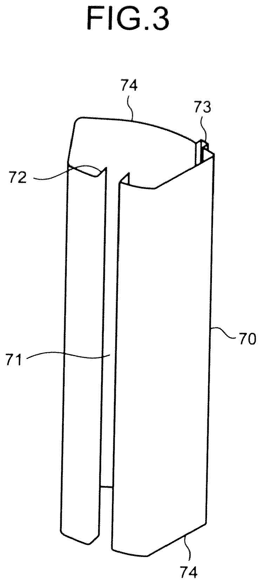

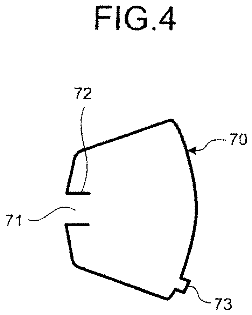

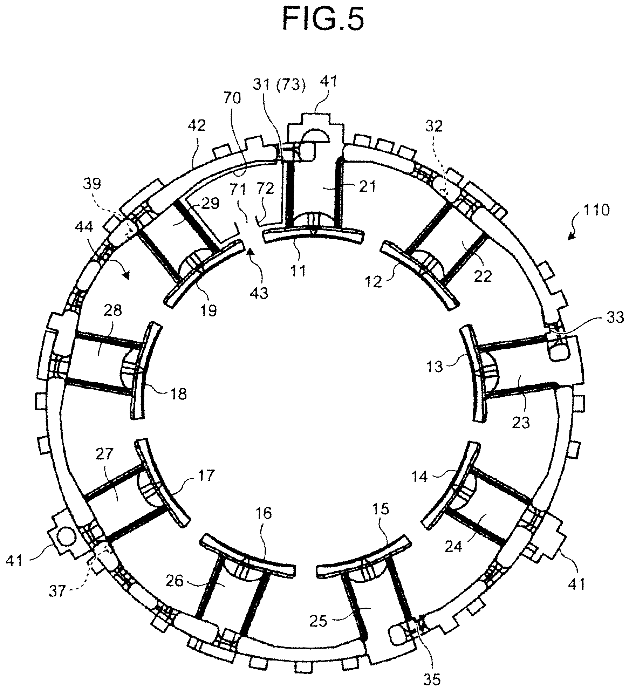

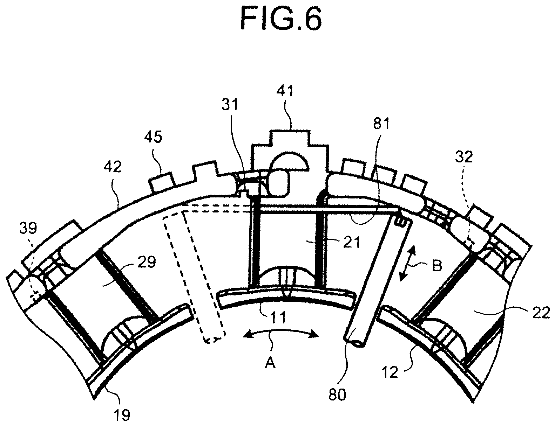

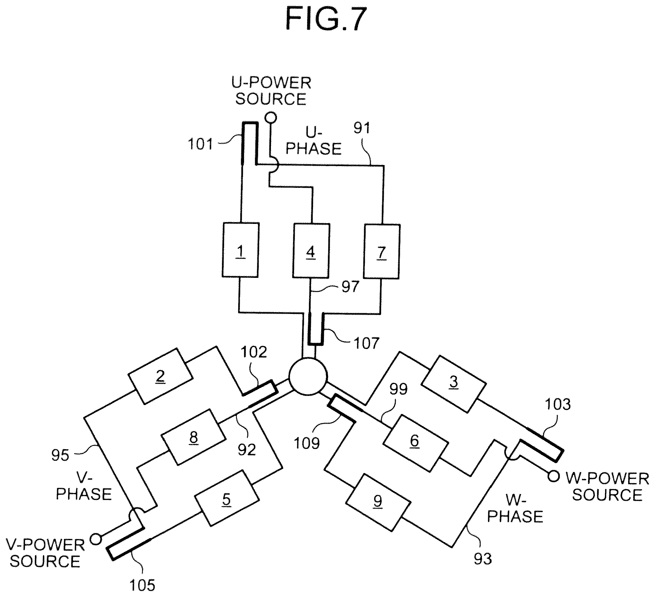

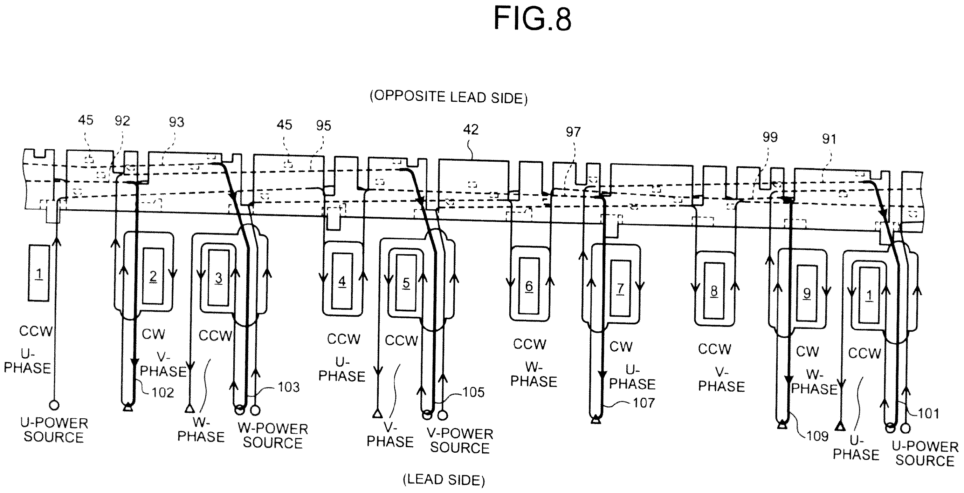

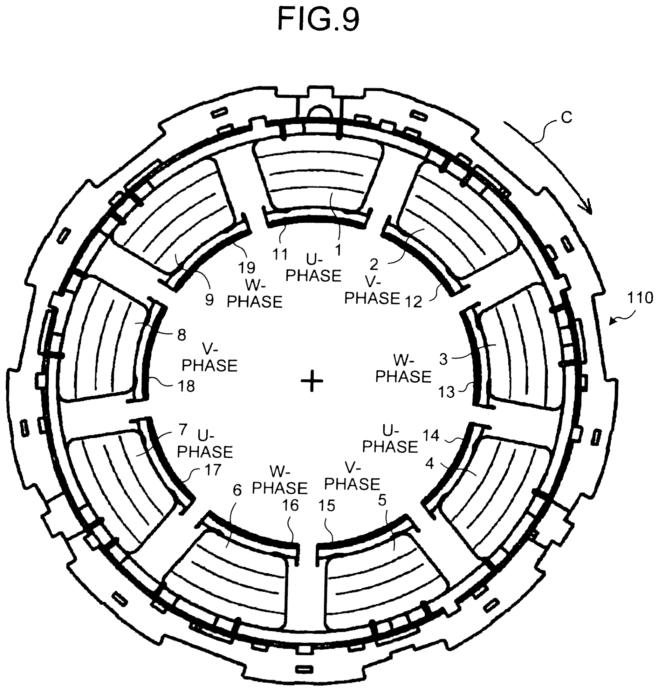

FIG. 1 is an exploded perspective view a stator of an electric motor according to the present invention. FIG. 2 is an enlarged perspective view of an insulator of FIG. 1. FIG. 3 is an enlarged perspective view of an insulator film of FIG. 1. FIG. 4 is a plan view of the insulator film of FIG. 3. FIG. 5 is a plan view of a stator made by assembling an insulator and a stator iron core of FIG. 1. FIG. 6 is a partial enlarged view illustrating a state of winding, by a winding machine, wire around the teeth of the stator of FIG. 5. FIG. 7 is a connection diagram of a parallel winding of the stator of an electric motor according to the present invention. FIG. 8 is a development view of a state in which lead wire is wound around the stator of FIG. 1 by a connection method of parallel winding of FIG. 7. FIG. 9 is a diagram illustrating a state in which wire is wound around all of the teeth of the stator of FIG. 5 by a winding machine.

As illustrated in FIG. 1, a stator 110 of an electric motor in accordance with the embodiment is provided with a stator iron core 50, an insulator film 70 inserted in a slot 60 of the stator iron core 50 so as to insulate a slot 60 from lead wire (refer to lead wire 81 of FIG. 6), and insulators 40 disposed on both axial end portions 63, 63 of the stator iron core 50 so as to insulate the axial end portion 63 from the lead wire 81 illustrated in FIG. 6.

The stator iron core 50 is formed in a tubular shape by laminating electromagnetic steel sheets formed by punching in an annular shape, and is provided with a yoke 61 of ring shape and a plurality of teeth 62 projecting toward the center from the yoke 61. Distal edges 65 project in a circumferential direction from the distal ends of the respective teeth 62.

The slot 60, which is a sector-shaped void, is formed so as to be surrounded between the circumferential inner side of the yoke 61 and the teeth 62 adjacent thereto. A slot opening 64, which is a gap, is formed between the distal edges 65 which circumferentially project from the distal ends of the teeth 62 so as to be opposite to each other.

As illustrated in FIGS. 1, 2, 5 and 6, the insulator 40 is formed in a short tubular shape, and includes an outer circumferential wall 42 to be disposed on the yoke 61 of the stator iron core 50, winding body portions 20 (21, 22, 23, 24, 25, 26, 27, 28, 29) projecting toward the center from the outer circumferential wall 42 on the stator iron core 50 side of the outer circumferential wall 42 so as to cover the teeth 62 of the stator iron core 50, and insulator edges 10 (11, 12, 13, 14, 15, 16, 17, 18, 19) projecting from the distal ends of the winding body portions 20 in a semicircular shape so as to support, from the inner diameter side, the winding wound around the winding body portions 20 and the teeth 62.

On the stator iron core 50 side of the outer circumferential wall 42, insulator slots 44 and insulator openings 43, which have shapes identical with the slots 60 and slot openings 64 of the stator iron core 50, are formed so as to be surrounded by the winding body portions 20 and the insulator edges 10 (11 to 19). On the outer circumferential face of the outer circumferential wall 42, a lot of protrusions 45 are disposed for holding and wiring the lead wire. Moreover, on the stator iron core 50 side of the outer circumferential wall 42 of the insulator 40, three outer claws 41 are provided. The outer claws 41 are outwardly fitted on the outer circumferential end portion of the stator iron core 50 to fix the insulator 40 to the stator iron core 50.

As illustrated in FIGS. 1 and 3 to 5, the insulator film 70, made by PET film, is formed by folding in a tubular shape having a cross-section of sector shape so as to be adhered to the inner wall of the slot 60. At this time, gate portions 72 at both ends in the circumferential direction are folded toward the inside of the tube so as to form a film opening 71 having an opening width that is larger than or equal to (the same as or more than) the opening width of the slot opening 64. The axial length of the insulator film 70 is formed longer than the axial length of the stator iron core 50. Therefore, when the insulator film 70 is inserted in the slot 60, an axial film end portion 74 of the insulator film 70 protrudes from the axial end portion 63 of the stator iron core 50.

Note that the insulator film of the present invention is not limited to this, and can be modified according to the equipment in which this electric motor is used. For example, when used in a compressor for compressing refrigerant, instead of the PET film, a fire-resistant insulator film such as a polyphenylene sulfide film or an insulator film made of aramid fiber is preferably used.

As illustrated in FIGS. 1, 6 and 9, the gate portions 72 of the insulator film 70 play a role for ensuring an insulation distance between the lead wire 81 and the distal edges 65 of the stator iron core 50 when the lead wire 81 is wound around the stator iron core 50.

A characteristic configuration of the stator of the electric motor according to the present embodiment is to adopt, as a winding structure of the lead wire, a parallel winding, in which in-phase windings are connected one another in parallel. The connection of the parallel winding entails folded lines, which form overlapping to generate an irregularity of winding. In order to prevent the irregularity caused by the overlapping from occurring when winding the winding body portion 20 of the insulator 40 and the teeth 62 of the stator iron core 50, first grooves 31, 32, 33, 35, 37, 39 on the insulator 40 and second grooves 51, 52, 53, 55, 57, 59 on the stator iron core 50, both of which are used to embed the folded lines, are formed to communicate with each other at predetermined positions.

As illustrated in FIGS. 1, 2 and 5, the first grooves 31, 32, 33, 35, 37, 39 on the insulator 40 side are formed at predetermined positions on the inner circumferential side of the outer circumferential wall 42 of the insulator 40. As illustrated in FIG. 1, the first grooves 31, 32, 33, 35, 37, 39 are also similarly formed in the other insulator 40 which is disposed on the opposite side over the stator iron core 50. When the lead wire diameter to be used is about 0.55 mm to 0.85 mm, the groove is preferably formed so as to have width and depth of 1.0 mm to 1.5 mm just in case.

As illustrated in FIG. 1, the second grooves 51, 52, 53, 55, 57, 59 on the stator iron core 50 side are formed so as to communicate with the first grooves 31, 32, 33, 35, 37, 39 of the insulator 40 when the insulator 40 is assembled with the stator iron core 50, and the sizes of the width and depth of the second groove are the same as those of the first grooves (this is true with the other insulator 40 disposed on the opposite side so as to be opposite to the former insulator 40 over the stator iron core 50).

As illustrated in FIGS. 1 and 3 to 5, the insulator film 70, which is to be inserted into each of the slots 60 of the stator iron core 50, includes in a part of the film a fold forming a concave portion 73 which can be inserted into the first grooves 31, 32, 33, 35, 37, 39 formed in the above-mentioned insulator 40 and the second grooves 51, 52, 53, 55, 57, 59 on the above-mentioned stator iron core 50. The fold of this concave portion 73 can be formed by repeating a mountain fold and a valley fold by means of a claw tool used in the insulator film forming process for forming folds.

As illustrated in FIGS. 1 and 5, in the stator 110 configured above of the electric motor according to this embodiment, the insulator films 70 are inserted into respective slots 60 of the stator iron core 50, so that the concave portions 73 of the insulator films 70 are fitted into the second grooves 51, 52, 53, 55, 57, 59 formed in the stator iron core 50. For the slots 60 in which no groove is formed, a normal insulator film in which no concave portion 73 is formed is inserted therein. After inserting the insulator films into respective slots 60 of the stator iron core 50, the insulators 40 are assembled on both axial end portions 63, 63 of the stator iron core 50. When assembling the insulators 40, the first grooves 31, 32, 33, 35, 37, 39 on the insulator 40 side are aligned with the second grooves 51, 52, 53, 55, 57, 59 of the stator iron core 50 so as to correspond with each other.

Under this state, as illustrated in FIG. 6, a nozzle 80 of the winding machine is inserted through the insulator opening 43 illustrated in FIG. 5 into the winding body portion 21 of the insulator 40 constituting the stator 110, the extending teeth of the stator iron core disposed axially opposite to the winding body portion 21, and the winding body portion of the other insulator disposed axially on the opposite side over the teeth. The nozzle 80 of the winding machine slides in the axial direction on the sheet of FIG. 6, and is rotatable in the directions of arrow A (right and left directions). Moreover, the nozzle 80 itself is configured to be extendable in the directions of arrow B (radial directions) for performing regular winding sequentially from the end of the winding body portion 21 of the insulator 40. Then, while supplying the lead wire 81 from the distal end of the nozzle 80, the nozzle 80 moves around the winding body portion 21 and the teeth so as to form the winding (armature coil). FIG. 9 illustrates the state in which the windings 1 to 9 are wound around all of the teeth of the stator by the winding machine. FIG. 9 is a drawing of the stator 110 viewed from the opposite lead side mentioned later.

As illustrated in FIG. 7, the electric motor according to this embodiment is a three-phase alternating current electric motor whose columnar rotator (not shown) disposed on the inner diameter side of the stator 110 is rotated in the direction of arrow C in FIG. 9 by generating rotational magnetic field through the application of three-phase voltage of U-phase, V-phase, and W-phase. When the windings constituting the same phase (U-phase: windings 1, 4, 7; V-phase: windings 2, 5, 8; W-phase: windings 3, 6, 9) are connected with one another by parallel winding as illustrated in FIG. 7, folded lines 101, 107 are generated at the U-phase, folded lines 102, 105 at the V-phase, and folded lines 103, 109 at the W-phase.

The folded lines 101, 102, 103, 105, 107, 109 are connected as illustrated in FIG. 8 when viewed in a state of being wound around the stator 110. Here, the side of the outer circumferential wall 42 of the insulator illustrated in FIG. 8 is called an opposite lead side, and the side of insulator on the opposite side over the stator iron core is called a lead side. For example, as illustrated in FIG. 8, the lead wire connected to the U-phase power source (U-power source) is extended along the outer circumferential face of the outer circumferential wall 42 of the insulator 40 as a jumper, is inserted into the inner circumferential face of the outer circumferential wall 42 through a notch of the outer circumferential wall 42, and is wound around at the winding body portion 24 of FIG. 5 so as to constitute the winding 4.

As described in FIG. 8, CW stands for clockwise, while CCW represents counterclockwise.

The lead wire, which has been used to finish the winding 4, is extended again along the outer circumferential face of the outer circumferential wall 42 through the notch so as to constitute a jumper 97. The jumper 97 constitutes a folded line 107 embedded in the first groove 37 formed on the inner circumferential face of the outer circumferential wall 42 through the notch of the outer circumferential wall 42 illustrated in FIG. 5 and the second groove 57 of FIG. 1 communicating with the first groove 37. After being folded on the lead side, the jumper 97 is wound around the winding body portion 27 of FIG. 5 so as to constitute the winding 7.

The lead wire, which has been used to finish the winding 7, is extended again along the outer circumferential face of the outer circumferential wall 42 through the notch so as to constitute a jumper 91. The jumper 91 constitutes a folded line 101 embedded in the first groove 31 formed on the inner circumferential face of the outer circumferential wall 42 through the notch of the outer circumferential wall 42 illustrated in FIG. 5 and the second groove 51 of FIG. 1 communicating with the first groove 31. After being folded on the lead side, the jumper 91 is wound around the winding body portion 21 of FIG. 5 so as to constitute the winding 1. The lead wire, which has been used to finish the winding 1, is connected to a neutral point (Δ) illustrated in FIG. 8.

The lead wire connected to the V-phase power source (V-power source) is extended along the outer circumferential face of the outer circumferential wall 42 of the insulator 40 as a jumper, inserted into the inner circumferential face of the outer circumferential wall 42 through the notch of the outer circumferential wall 42, and wound around the winding body portion 28 of FIG. 5 so as to constitute the winding 8.

The lead wire, which has been used to finish the winding 8, is extended again along the outer circumferential face of the outer circumferential wall 42 through the notch so as to constitute a jumper 92. The jumper 92 constitutes a folded line 102 embedded in the first groove 32 formed on the inner circumferential face of the outer circumferential wall 42 through the notch of the outer circumferential wall 42 illustrated in FIG. 5 and the second groove 52 of FIG. 1 communicating with the first groove 32. After being folded on the lead side, the jumper 92 is wound around the winding body portion 22 of FIG. 5 so as to constitute the winding 2.

The lead wire, which has been used to finish the winding 2, is extended again along the outer circumferential face of the outer circumferential wall 42 through the notch so as to constitute a jumper 95. The jumper 95 constitutes a folded line 105 embedded in the first groove 35 formed on the inner circumferential face of the outer circumferential wall 42 through the notch of the outer circumferential wall 42 illustrated in FIG. 5 and the second groove 55 of FIG. 1 communicating with the first groove 35. After being folded on the lead side, the jumper 95 is wound around the winding body portion 25 of FIG. 5 so as to constitute the winding 5. The lead wire, which has been used to finish the winding 5, is connected to the neutral point (Δ) illustrated in FIG. 8.

The lead wire connected to the W-phase power source (W-power source) is extended along the outer circumferential face of the outer circumferential wall 42 of the insulator 40 as a jumper, inserted into the inner circumferential face of the outer circumferential wall 42 through the notch of the outer circumferential wall 42, and wound around the winding body portion 26 of FIG. 5 so as to constitute the winding 6.

The lead wire, which has been used to finish the winding 6, is extended again along the outer circumferential face of the outer circumferential wall 42 through the notch so as to constitute a jumper 99. The jumper 99 constitutes a folded line 109 embedded in the first groove 39 formed on the inner circumferential face of the outer circumferential wall 42 through the notch of the outer circumferential wall 42 illustrated in FIG. 5 and the second groove 59 of FIG. 1 communicating with the first groove 39. After being folded on the lead side, the jumper 99 is wound around the winding body portion 29 of FIG. 5 so as to constitute the winding 9.

The lead wire, which has been used to finish the winding 9, is extended again along the outer circumferential face of the outer circumferential wall 42 through the notch so as to constitute a jumper 93. The jumper 93 constitutes a folded line 103 embedded in the first groove 33 formed on the inner circumferential face of the outer circumferential wall 42 through the notch of the outer circumferential wall 42 illustrated in FIG. 5 and the second groove 53 of FIG. 1 communicating with the first groove 33. After being folded on the lead side, the jumper 93 is wound around the winding body portion 23 of FIG. 5 so as to constitute the winding 3. The lead wire, which has been used to finish the winding 3, is connected to the neutral point (Δ) illustrated in FIG. 8.

According to the stator of the electric motor of this embodiment, the winding is connected by the connection method of parallel winding. When comparing the connection method of the parallel winding with a connection method of a serial winding, the value of electric current flowing through the winding is lowered when the same voltage is applied, so that copper loss of the electric motor is decreased, thereby providing an advantageous effect of improving the efficiency of the electric motor.

According to the stator of the electric motor of this embodiment, the windings of the same phase can be connected in parallel while the windings of the same phase and the connection line for connecting the windings of the same phase with one another are constituted by a single lead wire. Moreover, although the folded lines are generated by the parallel connection, the first grooves 31, 32, 33, 35, 37, 39, which enable the folded lines to be embedded on the inner circumferential faces of the insulator and the stator iron core constituting the stator, and the second grooves 51, 52, 53, 55, 57, 59 are formed so as to be communicated with each other. The folded lines are embedded in the first grooves and the second grooves, whereby the lead wires are prevented from being overlapped on one another even when the winding is wound around the winding body portion of the insulator after being folded. Accordingly, the winding can be made with a good alignment by regular winding from the end of the winding body portion, so that the number of turns for winding in the limited slot area of the stator can be increased. When the number of turns is fixed, lead wire of larger diameter can be adopted. As mentioned above, in this embodiment, since the first grooves and the second grooves in which the folded lines are embedded are disposed, the winding can be made with high space factor. In addition to the adoption of the parallel winding, copper loss of the electric motor can be decreased, so that the efficiency of the electric motor can be further improved.

Moreover, the insulator films 70 used in the stator of the electric motor of this embodiment includes the concave portion 73 that can be inserted into the second grooves 51, 52, 53, 55, 57, 59 formed in the stator iron core 50. Accordingly, even when the folded lines 101, 102, 103, 105, 107, 109 are put into respective second grooves 51, 52, 53, 55, 57, 59, with the insulator film 70 inserted into the slot 60 of the stator iron core 50, the embedding can be done under the conditions of insulation. As a result, the space factor of the winding can be enhanced while maintaining the insulating state.

The widths and the depths of the first grooves 31, 32, 33, 35, 37, 39 formed on the inner circumferential face of the insulator 40 and the second grooves 51, 52, 53, 55, 57, 59 formed on the inner circumferential face of the stator iron core 50 are set to be sufficient with respect to the diameter of the folded lines 101, 102, 103, 105, 107, 109 to be embedded. Therefore, there is no possibility that the folded lines protrude from the grooves, so that the folded lines and the winding make no contact with each other, whereby the insulation can be surely ensured.

Note that although, in the above-mentioned embodiment, the insulators 40 disposed on both ends of the stator iron core 50 constituting the stator of the electric motor are formed in the same configuration so as to decrease the manufacturing cost, this is not the only case. For example, as illustrated in FIG. 8, the wiring of the insulator on the opposite lead side is different from that of the insulator on the lead side. Accordingly, dedicated insulators can be disposed, in which grooves, protrusions, and notches are formed according to the respective wirings on the opposite lead side and the lead side.

As mentioned above, the stator, which is incorporated into a rotary compressor, of the electric motor according to the present invention is useful for a stator of an electric motor with high efficiency and an insulator film used for the stator.

According to one embodiment of the present invention, the first grooves and the second grooves are disposed at predetermined positions on the inner circumferential sides of the insulator and the stator iron core, respectively, so as to axially communicate with each other. Then, a part of the connection line is embedded in the first and second grooves. The stator is structured by winding lead wire around a plurality of teeth via the insulator. Accordingly, the advantages are produced that an irregularity of winding is hard to occur, and that the space factor of winding can be improved.

Although the invention has been described with respect to specific embodiments for a complete and clear disclosure, the appended claims are not to be thus limited but are to be construed as embodying all modifications and alternative constructions that may occur to one skilled in the art that fairly fall within the content of the claims as herein set forth.

## Claims

1. An electric motor comprising:
- a rotator; and
- a stator (110) disposed on an outer diameter side of the rotator,
wherein the stator (110) includes:
- a cylindrical stator iron core (50) provided with a plurality of teeth (62) radially projecting from an inner circumferential side of an annular yoke (61) toward a center;
- insulators (40) made of an insulation material disposed on both ends (63) of the stator iron core (50) in an axial direction; and
- windings wound around the teeth (62) via the insulators (40),
wherein the insulator (40) includes a first groove (31) disposed on an inner circumferential side thereof along an axial direction,
wherein the stator iron core (50) includes a second groove (51) disposed on an inner circumferential side thereof along the axial direction, and
wherein the first groove (31, 32, 33, 35, 37, 39) and the second groove (51, 52, 53, 55, 57, 59) are disposed so as to communicate with each other in the axial direction,
**characterized in that**
the first groove and the second groove (51, 52, 53, 55, 57, 59) which communicate with each other embed therein a part of a connection line connecting the windings mutually.

2. The electric motor according to claim 1, wherein the electric motor is a polyphase alternating current electric motor,
wherein the windings of a same phase (1, 4, 7; 2, 5, 8; 3, 6, 9) wound around the teeth (62) and the connection line connecting the windings of a same phase with each other are configured by a single lead wire (81), and
wherein the first groove (31, 32, 33, 35, 37, 39) and the second groove (51, 52, 53, 55, 57, 59) embed therein as a folded line (101, 102, 103, 105, 107,109) a part of the connection line extended from one insulator to the other insulator.

3. The electric motor according to claim 1 or 2, further comprising an insulator film (70) formed in a tubular shape partially opened and provided with a concave portion (78) formed corresponding to shapes of the first groove and the second groove (51, 52, 53, 55, 57, 59),
wherein the insulator film (70) is inserted in each slot sandwiched between adjacent teeth (62), and the concave portion (73) formed in the insulator film (40) is fitted into the first groove (31, 32, 33, 35, 37, 39) and the second groove (51, 52, 53, 55, 57, 59) to be mounted.

## Patentansprüche

1. Elektromotor, umfassend:
- einen Rotor, und
- einen Stator (110), der an einer äußeren Durchmesserseite des Rotors angeordnet ist,
wobei der Stator (110) aufweist:
- einen zylindrischen Statoreisenkern (50), der mit mehreren Zähnen (62) versehen ist, die radial von einer inneren Umfangsseite eines ringförmigen Jochs (61) zu einer Mitte hin hervorstehen,
- aus einem Isoliermaterial gefertigte Isolatoren (40), die an beiden Enden (63) des Statoreisenkerns (50) in einer axialen Richtung angeordnet sind, und
- Spulen, die über die Isolatoren (40) um die Zähne (62) gewickelt sind,
wobei der Isolator (40) eine erste Nut (31) aufweist, die an einer inneren Umfangsseite davon in einer axialen Richtung angeordnet ist,
wobei der Statoreisenkern (50) eine zweite Nut (51) aufweist, die an einer inneren Umfangsseite davon in der axialen Richtung angeordnet ist, und
wobei die erste Nut (31, 32, 33, 35, 37, 39) und die zweite Nut (51, 52, 53, 55, 57, 59) so angeordnet sind, dass sie in der axialen Richtung miteinander in Verbindung stehen,
**dadurch gekennzeichnet, dass**
die erste Nut und die zweite Nut (51, 52, 53, 55, 57, 59), die miteinander in Verbindung stehen, in sich einen Teil einer Verbindungsleitung, die die Spulen miteinander verbindet, einbetten.

2. Elektromotor nach Anspruch 1, wobei der Elektromotor ein Mehrphasen-Wechselstromelektromotor ist,
wobei die Spulen einer gleichen Phase (1, 4, 7; 2, 5, 8; 3, 6, 9), die um die Zähne (62) gewickelt sind, und die Verbindungsleitung, die die Spulen einer gleichen Phase miteinander verbindet, mit einem einzigen Leitungsdraht (81) konfiguriert sind, und
wobei die erste Nut (31, 32, 33, 35, 37, 39) und die zweite Nut (51, 52, 53, 55, 57, 59) in sich einen Teil der Verbindungsleitung als eine gefaltete Leitung (101, 102, 103, 105, 107, 109), die sich von einem Isolator zu dem anderen Isolator erstreckt, einbetten.

3. Elektromotor nach Anspruch 1 oder 2, ferner umfassend eine Isolierschicht (70), die in einer Röhrenform ausgebildet ist, die teilweise geöffnet und mit einem konkaven Abschnitt (78) versehen ist, der passend zu Formen der ersten Nut und der zweiten Nut (51, 52, 53, 55, 57, 59) ausgebildet ist,
wobei die Isolierschicht (70) in jedem Schlitz, der sich zwischen benachbarten Zähnen (62) befindet, eingebracht ist, und der in der Isolierschicht (40) gebildete konkave Abschnitt (73) in die erste Nut (31, 32, 33, 35, 37, 39) und in die zweite Nut (51, 52, 53, 55, 57, 59) eingepasst ist, um eingebaut zu sein.

## Revendications

1. Moteur électrique comprenant :
- un rotor ; et
- un stator (110) disposé sur un côté de diamètre externe du rotor,
dans lequel le stator (110) comprend :
- un noyau cylindrique en fer de stator (50) prévu avec une pluralité de dents (62) faisant radialement saillie à partir d'un côté circonférentiel interne d'une culasse annulaire (61) vers un centre ;
- des isolateurs (40) réalisés avec un matériau d'isolation, disposés sur deux extrémités (63) du noyau en fer de stator (50) dans une direction axiale ; et
- des enroulements enroulés autour des dents (62) via les isolateurs (40),
dans lequel l'isolateur (40) comprend une première rainure (31) disposée sur son côté circonférentiel interne le long d'une direction axiale,
dans lequel le noyau en fer de stator (50) comprend une seconde rainure (51) disposée sur son côté circonférentiel interne le long de la direction axiale, et
dans lequel la première rainure (31, 32, 33, 35, 37, 39) et la seconde rainure (51, 52, 53, 55, 57, 59) sont disposées afin de communiquer entre elles dans la direction axiale,
**caractérisé en ce que** :
la première rainure et la seconde rainure (51, 52, 53, 55, 57, 59) qui communiquent entre elles encastrent à l'intérieur de ces dernières, une partie d'une ligne de connexion connectant mutuellement les enroulements.

2. Moteur électrique selon la revendication 1, dans lequel le moteur électrique est un moteur électrique à courant alternatif polyphasé,
dans lequel les enroulements d'une même phase (1, 4, 7 ; 2, 5, 8 ; 3, 6, 9) enroulés autour des dents (62) et la ligne de connexion raccordant les enroulements d'une même phase entre eux, sont configurés par un seul fil conducteur (81), et
dans lequel la première rainure (31, 32, 33, 35, 37, 39) et la seconde rainure (51, 52, 53, 55, 57, 59) encastrent à l'intérieur de ces dernières, en tant que ligne pliée (101, 102, 103, 105, 107, 109), une partie de ligne de connexion étendue d'un isolateur à l'autre.

3. Moteur électrique selon la revendication 1 ou 2, comprenant en outre un film isolant (70) formé selon une forme tubulaire partiellement ouverte est prévu avec une partie concave (78) formée de manière correspondante aux formes de la première rainure et de la seconde rainure (51, 52, 53, 55, 57, 59),
dans lequel le film isolant (70) est inséré dans chaque fente prise en sandwich entre des dents (62) adjacentes, et la partie concave (73) formée dans le film isolant (40) est installée dans la première rainure (31, 32, 33, 35, 37, 39) et la seconde rainure (51, 52, 53, 55, 57, 59) pour être montée.
